(19) Europäisches Patentamt
European Patent Office
Office européen des brevets

(11) EP 0 684 303 B1

(12) EUROPEAN PATENT SPECIFICATION

(45) Date of publication and mention of the grant of the patent:
**13.12.2000 Bulletin 2000/50**

(51) Int Cl.[7]: **C11D 3/37**, C11D 17/00, C11D 3/22, C11D 17/06

(21) Application number: **95302732.3**

(22) Date of filing: **24.04.1995**

(54) **Detergent compositions**

Waschmittelzusammensetzungen

Compositions détergents

(84) Designated Contracting States:
**CH DE ES FR GB IT LI NL SE**

(30) Priority: **27.05.1994 GB 9410677**

(43) Date of publication of application:
**29.11.1995 Bulletin 1995/48**

(73) Proprietors:
- **UNILEVER PLC**
  **London EC4P 4BQ (GB)**
  Designated Contracting States:
  **GB**
- **UNILEVER N.V.**
  **3013 AL Rotterdam (NL)**
  Designated Contracting States:
  **CH DE ES FR IT LI NL SE**

(72) Inventors:
- **van der Hoeven, Frans Albertus,**
  **Unilever Research**
  **NL-3133 AT Vlaardingen (NL)**
- **Houghton, Mark Phillip, Unilever Research**
  **NL-3133 AT Vlaardingen (NL)**

(74) Representative: **Fransella, Mary Evelyn et al**
**Unilever PLC**
**Patent Division**
**Colworth House**
**Sharnbrook**
**Bedford MK44 1LQ (GB)**

(56) References cited:
**EP-A- 0 071 481**
**EP-A- 0 094 250**
**EP-A- 0 213 953**
**EP-A- 0 414 221**
**EP-A- 0 495 345**
**EP-A- 0 496 510**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 684 303 B1

## Description

### TECHNICAL FIELD

The present invention relates to particulate detergent compositions containing a granular silicone-based foam control agent in which silicone oil is carried on an absorbent starch material.

### BACKGROUND AND PRIOR ART

Detergent products containing anionic and/or nonionic surfactants which are particularly suitable for fabric washing generally have a tendency to produce excessive foam. This can be a problem particularly with drum-type washing machines, and it is accordingly usual to include a foam control agent in the detergent formulation.

Foam control agents based on silicone oils are especially effective in suppressing the foam of today's highly effective surfactants. However, silicone oils are notoriously difficult to contain within granules in a detergent powder, and such granules tend to become deactivated on storage. Migration of silicone oil through the powder on storage can also lead to stickiness, lack of flow and caking. There have been many attempts to produce foam control granules, in which silicone oil is carried on an absorbent, porous solid carrier material, which combine storage stability with the ability to release the silicone oil rapidly into the wash liquor.

Most recently there has been a trend towards highly compact detergent powders, having bulk densities of 650 g/litre or above, prepared either by post-tower compaction of a spray-dried powder or by wholly non-tower mixing and granulation processes. Unlike powders which are the direct products of the traditional spray-drying process, such powders have low particle porosity and incorporating mobile liquid ingredients successfully into such powders has proved especially problematic, leading to difficulties with powder flow, and above all with delivery into the wash. Generally high bulk density powders will not dispense successfully from the dispenser drawer of a front-loading automatic washing machine and manufacturers are providing dispensing devices by means of which the powder can be placed directly in the machine drum with the washload.

The problem of poor delivery into the wash is not, however, limited to powders of high bulk density or to powders prepared by non-tower processes. Powders produced by more traditional methods can also dispense poorly. Poor dispensig and delivery appears to be an especial problem with powders containing a high level of small particles or "fines". This problem is exacerbated by the presence of silicone-based foam control granules.

The present inventors have now discovered that the dispensing problems encountered with powders containing silicone foam control granules are alleviated if the sole or principal carrier material in those granules is a starch.

Granular foam control agents in which silicone oil is carried on native or modified starch are disclosed in the art.

EP 496 510B (Dow Corning) discloses a particulate finely-divided foam control agent in which a silicone antifoam and an organic material (a fatty acid, a fatty alcohol or a glycerol fatty acid monoester) are deposited on a native starch carrier. The granules exhibit superior storage stability compared with granules in which the carrier is sodium tripolyphosphate or sodium carboxymethyl cellulose.

Foam control granules in which a silicone oil is carried on a starch material are also disclosed in EP 484 081A (Unilever), EP 213 953A (Unilever), EP 206 522A (Unilever), EP 94 250A (Unilever), EP 71 481A (Unilever), GB 1 407 997A (Procter & Gamble), JP 59 222 209A (Shinetsu), EP 414 221A (Kao), EP 496 510A (Dow Corning) and EP 495 345A (Procter & Gamble).

WO 93 01269A (Unilever) discloses silicone foam control granules in which the carrier material is cellulosic. In order to avoid a detrimental effect on dispensing in an automatic washing machine, the inclusion of an effervescent material is recommended.

Porous inorganic carrier materials for silicone antifoams are also well-known in the art, for example, sodium tripolyphosphate with sodium silicate and/or sodium sulphate as disclosed in EP 22 998A (Henkel), sodium perborate monohydrate and zeolite as disclosed in EP 109 347A (Unilever), and highly porous sodium carbonate or Burkeite as disclosed in EP 266 863A (Unilever).

### DEFINITION OF THE INVENTION

The present invention accordingly provides a particulate controlled foam detergent composition containing a foam controlling amount of a foam control granule comprising a silicone foam control agent on an absorbent carrier material, characterised in that

(a) the composition has a content of particles smaller than 180 micrometres of at least 10 wt%, and that

(b) the absorbent carrier material of the foam control granule comprises a starch.

The invention further provides the use of a foam control granule comprising a silicone foam control agent on an absorbent carrier material comprising a starch to improve the dispensing behaviour in a drum-type automatic washing machine of a particulate controlled foam detergent composition.

## DETAILED DESCRIPTION OF THE INVENTION

The invention is especially applicable to powders wherein an otherwise identical control powder minus the foam control granule gives a dispenser residue (as hereinafter defined) of at least 20 wt%.

### The foam control granule

The foam control granule present in the detergent composition of the invention may suitably comprise from 5 to 20 wt% of the silicone foam control agent, from 20 to 95 wt% of starch, and optionally up to 75 wt% of a further carrier material.

### The silicone foam control agent

The silicone foam control agent preferably comprises a silicone oil (liquid polydiorganosiloxane) in combination with a hydrophobic silica. These foam control agents are well-known and have been widely disclosed in the art, for example, in EP 266 863A (Unilever).

A suitable polydiorganosiloxane is a substantially linear polymer of the average formula:

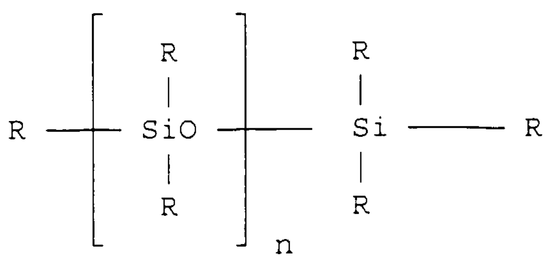

wherein each R independently can be an alkyl or aryl radical, for example, a methyl, ethyl, propyl, isobutyl or phenyl group. A small amount of branching in the chain is possible and small amounts of silicon-bonded hydroxyl groups may also be present.

Preferred polydiorganosiloxanes are polydimethyl siloxanes having trimethylsilyl end-blocking units, that is to say, all groups R in the formula above are methyl groups.

The silicone oil may suitably have a dynamic viscosity of from 3000 to 40 000 mPas. The invention is of especial benefit for silicone oils of higher viscosity, for example, above 7000 mPas.

The silicone oil may advantageously contain suspended particles of hydrophobised silica. The silica may be a fumed silica, a precipitated silica, or a silica made by the gel formation technique. The silica particles preferably have an average particle size of from 0.1 to 50 micrometres, preferably from 1 to 20 micrometres, and a surface area of at least 50 $m^2$/g. These silica particles may be rendered hydrophobic, for example, by treating them with dialkylsilyl groups and/or trialkylsilyl groups bonded directly onto the silica. The amount of silica present in the silicone oil/silica foam control compound is suitably within the range of from 1 to 30 wt%, more preferably from 2 to 15 wt%.

Suitable silicone oils and silicone/silica compounds are commercially available, for example, from Dow Corning, Wacker-Chemie, and Rhône-Poulenc.

### The starch carrier material

The starch material is preferably a native starch, although chemically modified starches such as gelatinised starch are also within the scope of the invention. Starch is a polysaccharide which is present in seeds, fruits and tubers and comprises amylose and amylopectin. The term "native starch" refers to starch as extracted from its natural source without alteration of its chemical or structural nature. Suitable sources of native starch include potato, rice, corn, maize and wheat. Native starches are available, for example, from National Starch Limited.

The starch used in the present invention desirably has a surface area of at least 0.3 $m^2$/g. Surface area is a

measure of total porosity, whether inter-particle or intra-particle.

Preferably, at least 20 wt% and more preferably at least 25 wt% of the granule is constituted by the starch carrier material.

The optional further carrier material

The foam control granule may contain an additional carrier material, which may constitute up to 75 wt% of the granule. Suitable materials include $C_{12-20}$ fatty acids and alcohols, for example, stearyl alcohol; and inorganic salts, for example, sodium sulphate.

The detergent composition

The detergent composition of the invention will contain surfactants, builders and other conventional detergent ingredients as required or desired.

The detergent compositions of the invention will contain, as essential ingredients, one or more detergent-active compounds (surfactants) which may be chosen from soap and non-soap anionic, cationic, nonionic, amphoteric and zwitterionic detergent-active compounds, and mixtures thereof. Many suitable detergent-active compounds are available and are fully described in the literature, for example, in "Surface-Active Agents and Detergents", Volumes I and II, by Schwartz, Perry and Berch.

The preferred detergent-active compounds that can be used are soaps and synthetic non-soap anionic and nonionic compounds.

Anionic surfactants are well-known to those skilled in the art. Examples include alkylbenzene sulphonates, particularly linear alkylbenzene sulphonates having an alkyl chain length of $C_8$-$C_{15}$; primary and secondary alkylsulphates, particularly $C_8$-$C_{22}$ primary alkyl sulphates; alkyl ether sulphates; olefin sulphonates; alkyl xylene sulphonates; dialkyl sulphosuccinates; and fatty acid ester sulphonates. Sodium salts are generally preferred.

Nonionic surfactants that may be used include the primary and secondary alcohol ethoxylates, especially the $C_{8-20}$ aliphatic alcohols ethoxylated with an average of from 1 to 20 moles of ethylene oxide per mole of alcohol, and more especially the $C_{10}$-$C_{15}$ primary and secondary aliphatic alcohols ethoxylated with an average of from 1 to 10 moles of ethylene oxide per mole of alcohol. Non-ethoxylated nonionic surfactants include alkylpolyglycosides, glycerol monoethers, and polyhydroxy fatty acid amides (eg glucamides).

Detergent compositions suitable for use in most automatic fabric washing machines generally contain anionic non-soap surfactant, or nonionic surfactant, or combinations of the two in any ratio, optionally together with soap.

The total amount of surfactant present in the compositions of the invention is suitably within the range of from 5 to 40 wt%.

The detergent compositions of the invention will generally also contain one or more detergency builders. The total amount of detergency builder in the compositions will suitably range from 5 to 80 wt%, preferably from 10 to 60 wt%.

Inorganic builders that may be present include sodium carbonate, if desired in combination with a crystallisation seed for calcium carbonate, as disclosed in GB 1 437 950 (Unilever); crystalline and amorphous aluminosilicates, for example, zeolites as disclosed in GB 1 473 201 (Henkel), amorphous aluminosilicates as disclosed in GB 1 473 202 (Henkel) and mixed crystalline/amorphous aluminosilicates as disclosed in GB 1 470 250 (Procter & Gamble); and layered silicates as disclosed in EP 164 514B (Hoechst). Inorganic phosphate builders, for example, sodium orthophosphate, pyrophosphate and tripolyphosphate, may also be present, but on environmental grounds those are no longer preferred.

Zeolite builders may suitably be present in amounts of from 5 to 80 wt%, preferably from 10 to 60 wt%. The zeolite used in most commercial particulate detergent compositions is zeolite A. Advantageously, however, maximum aluminium zeolite P (zeolite MAP) described and claimed in EP 384 070A (Unilever) may be used. Zeolite MAP is an alkali metal aluminosilicate of the P type having a silicon to aluminium ratio not exceeding 1.33, preferably not exceeding 1.15, and more preferably not exceeding 1.07.

Organic builders that may be present include polycarboxylate polymers such as polyacrylates, acrylic/maleic copolymers, and acrylic phosphinates; monomeric polycarboxylates such as citrates, gluconates, oxydisuccinates, glycerol mono-, di- and trisuccinates, carboxymethyloxysuccinates, carboxymethyloxymalonates, dipicolinates, hydroxyethyliminodiacetates, alkyl- and alkenylmalonates and succinates; and sulphonated fatty acid salts. This list is not intended to be exhaustive.

Especially preferred organic builders are citrates, suitably used in amounts of from 5 to 30 wt%, preferably from 10 to 25 wt%; and acrylic polymers, more especially acrylic/maleic copolymers, suitably used in amounts of from 0.5 to 15 wt%, preferably from 1 to 10 wt%.

Builders, both inorganic and organic, are preferably present in alkali metal salt, especially sodium salt, form.

Detergent compositions according to the invention may also suitably contain a bleach system. This may desirably include a peroxy bleach compound, for example, an inorganic persalt or an organic peroxyacid, capable of yielding hydrogen peroxide in aqueous solution. Suitable peroxy bleach compounds include organic peracids, and inorganic persalts such as the alkali metal perborates, percarbonates, perphosphates, persilicates and persulphates. Preferred inorganic persalts are sodium perborate monohydrate and tetrahydrate, and sodium percarbonate. Especially preferred is sodium percarbonate having a protective coating against destabilisation by moisture. Sodium percarbonate having a protective coating comprising sodium metaborate and sodium silicate is disclosed in GB 2 123 044B (Kao).

The peroxy bleach compound is suitably present in an amount of from 5 to 35 wt%, preferably from 10 to 25 wt%.

The peroxy bleach compound may be used in conjunction with a bleach activator (bleach precursor) to improve bleaching action at low wash temperatures. The bleach precursor is suitably present in an amount of from 1 to 8 wt%, preferably from 2 to 5 wt%. Preferred bleach precursors are peroxycarboxylic acid precursors, more especially peracetic acid precursors and peroxybenzoic acid precursors; and peroxycarbonic acid precursors. An especially preferred bleach precursor suitable for use in the present invention is N,N,N',N'-tetracetyl ethylenediamine (TAED).

A bleach stabiliser (heavy metal sequestrant) may also be present. Suitable bleach stabilisers include ethylenediamine tetraacetate (EDTA) and the polyphosphonates such as Dequest (Trade Mark), EDTMP.

An especially preferred bleach system comprises a peroxy bleach compound (preferably sodium percarbonate optionally together with a bleach activator), and a transition metal bleach catalyst as described and claimed in EP 458 397A, EP 458 398A and EP 509 787A (Unilever).

The compositions of the invention may contain alkali metal, preferably sodium, carbonate, in order to increase detergency and ease processing. Sodium carbonate may suitably be present in amounts ranging from 1 to 60 wt%, preferably from 2 to 40 wt%. However, compositions containing little or no sodium carbonate are also within the scope of the invention.

Powder flow may be improved by the incorporation of a small amount of a powder structurant, for example, a fatty acid (or fatty acid soap), a sugar, an acrylate or acrylate/maleate polymer, or sodium silicate. One preferred powder structurant is fatty acid soap, suitably present in an amount of from 1 to 5 wt%.

Other materials that may be present in detergent compositions of the invention include sodium silicate; antiredeposition agents such as cellulosic polymers; fluorescers; inorganic salts such as sodium sulphate; proteolytic and lipolytic enzymes; dyes; coloured speckles; perfumes; and fabric softening compounds. This list is not intended to be exhaustive.

The detergent composition of the invention may suitably contain from 0.5 to 5 wt% of the starch-based foam control granule characteristic of the invention.

Preparation of the detergent compositions

Detergent compositions of the invention may be prepared by any suitable method. Particulate detergent compositions are suitably prepared by spray-drying a slurry of compatible heat-insensitive ingredients to give a base powder, and then spraying on or postdosing those ingredients unsuitable for processing via the slurry. The skilled detergent formulator will have no difficulty in deciding which ingredients should be included in the base powder and which should not.

Especially preferred compositions have bulk densities of at least 650 g/litre, more preferably at least 700 g/litre.

Such powders may be prepared either by post-tower densification of spray-dried powder, or by wholly non-tower methods such as dry mixing and granulation; in both cases a high-speed mixer/granulator may advantageously be used. Processes using high-speed mixer/granulators are disclosed, for example, in EP 340 013A, EP 367 339A, EP 390 251A and EP 420 317A (Unilever). Again a base powder is obtained and ingredients unsuitable for such processing are postdosed.

As is well known to those skilled in the art, the foam control granules characteristic of the invention will be postdosed rather than form part of the base powder.

Dispensing behaviour

The compositions of the invention are characterised by poor dispensing characteristics (measured in the absence of the antifoam granules). Poor dispensing characteristics may be attributable to a high level of small particles ("fines"). Fines are particles smaller than 180 micrometres, and the invention is applicable to powders containing at least 10 wt% of fines, and especially to those containing at least 15 wt% of fines. Fines content may be determined by standard sieving procedures.

The poor dispensing characteristics may be demonstrated by means of the dispenser test described below. The composition (minus the foam control granule) will generally give a dispenser residue of at least 20 wt% in the test, and the invention is especially applicable to compositions which (minus the foam control granule) give a dispenser

residue of at least 25 wt% in the test.

The dispenser test

For the purposes of the present invention, dispensing is assessed by means of a standard procedure using a test rig based on the main wash compartment of the dispenser drawer of the Philips (Trade Mark) AWB 126/7 washing machine. This drawer design provides an especially stringent test of dispensing characteristics especially when used under conditions of low temperature, low water pressure and low rate of water flow.

The test drawer will now be described with reference to the accompanying drawings, in which:

Figure 1 represents a plan view of the drawer;

Figure 2 represents a sectional view along the line X-X' in Figure 1; and

Figure 3 represents an end view.

Referring now to the accompanying drawings, the drawer 1 is of generally cuboidal shape and consists of a main compartment A, and a small front compartment B and a separate compartment C for fabric conditioner which play no part in the test. The approximate dimensions of the drawer are as follows: x = 19 cm, x' = 1.5 cm, y = 7.5 cm, z = 6.5 cm, m = 4.5 cm, n = 1.5 cm, u = 4 cm, v = 3 cm, w = 9 cm.

In the test, a 100 g dose of powder is placed in a heap 2 at the front end of the main compartment A of the drawer, and subjected to a water fill of 5 litres at 10°C and an inlet pressure of 50 kPa, flowing in over a period of 1 minute. The water enters through 2 mm diameter holes in a plate above the drawer; dots 3 show the position of these holes. It will be noted that some water enters the compartment B and therefore does not reach the powder. Powder and water in principle leave the drawer at the rear end 4 which is open.

After 1 minute the flow of water is ceased, and the powder remaining is then collected and dried to constant weight. The dry weight of powder recovered from the dispenser drawer, in grams, represents the weight percentage of powder not dispensed into the machine (the residue). Every result is the average of two duplicate measurements.

EXAMPLES

The invention is further illustrated by the following non-limiting Examples, in which parts and percentages are by weight unless otherwise stated. Examples and compositions designated by numbers are within the invention, while examples and compositions designated by letters are comparative.

EXAMPLES 1 and 2, COMPARATIVE EXAMPLES A and B

Detergent powders were prepared to the following general formulation by spray-drying, postdosing, and dry mixing, each containing 1 wt% of foam control granules as further specified below. The dry mixing stage was carried out for 30 minutes in a small-scale (1 m diameter) concrete mixer operating at 30 rev/min, in order to simulate factory mixing conditions and ensure that the silicone-containing granules were distributed throughout the powder.

| Base powder (spray-dried) | |
|---|---|
| Sodium alkylbenzene sulphonate | 5.54 |
| Nonionic surfactant 7EO | 3.69 |
| Nonionic surfactant 3EO | 2.80 |
| Sodium soap | 0.53 |
| Sodium tripolyphosphate | 21.00 |
| Acrylate/maleate copolymer | 1.50 |
| Sodium silicate | 5.54 |
| Sodium carboxymethylcellulose | 0.42 |
| Fluorescer | 0.08 |
| Sodium sulphate | 1.60 |
| Other salts | 0.32 |
| Water | 6.95 |

| Post-dosed | |
|---|---|
| Sodium perborate tetrahydrate | 10.00 |
| TAED granules (83%) | 2.50 |
| Foam control granule | 1.00 |
| Enzymes | 0.46 |
| Sodium carbonate | 8.00 |
| Sodium sulphate | 27.82 |
| | 100.00 |

Two different powders were prepared; one (Powder I) had a high fines level of 18-22 wt%; the other (Powder X) had a lower fines level of 3-5 wt%.

Foam control granules were prepared using the following silicone oils and carrier materials:

Granule 1: 8 wt% silicone oil of 15 000 mPas
25 wt% starch
25 wt% sodium sulphate

Granule 2: 12 wt% silicone oil of 30 000 mPas
18 wt% stearyl alcohol
70 wt% maize starch

Granule A: 18 wt% silicone oil of 3500 mPas
70 wt% light soda ash
9.6 wt% petroleum jelly
2.4 wt% alkyl phosphate

Granule B: 16 wt% silicone oil of 15 000 mPas
84 wt% light soda ash

Granule A was in accordance with EP 266 863B (Unilever).

Foam control performance

Foam control performances were compared using a specially adapted Miele (Trade Mark) W765 washing machine provided with a foam height monitor. Standard 40°C main washes were carried out in 15° (French) hard water using a full clean load (3 kg of cotton) and 120 g of powder. The foam height at the end of the main wash just before the first rinse was recorded, on a scale in which a full porthole was 1.0. The experiment was carried out both with fresh powders and with powders that had been stored for 4 weeks at 37°C and 70% relative humidity. The results were as follows:

| Antifoam granule | Foam height | |
|---|---|---|
| | Fresh powder | 4-week powder |
| A | 0.7 | 0.7 |
| B | 0.6 | 1.0 |
| 1 | 0.7 | 0.8 |
| 2 | 0.6 | 0.75 |

Dispenser residues

Powder I (high fines)

| Antifoam granule | Dispenser residue (wt%) |
|---|---|
| No antifoam | 30 |

(continued)

| Antifoam granule | Dispenser residue (wt%) |
|---|---|
| A | 60 |
| B | 65 |
| 1 | 40 |
| 2 | 30 |

Powder X (low fines)

| Antifoam granule | Dispenser residue (wt%) |
|---|---|
| No antifoam | 0 |
| A | 0 |
| B | 0 |
| 1 | 0 |
| 2 | 0 |

The benefits of using a starch-based foam control granule in a poorly dispensing powder are clear.

## Claims

1. A particulate controlled foam detergent composition containing a foam controlling amount of a foam control granule comprising a silicone foam control agent on an absorbent carrier material, characterised in that

   (a) the composition has a content of particles smaller than 180 micrometres of at least 10 wt%, and that

   (b) the absorbent carrier material of the antifoam granule comprises a starch.

2. A detergent composition as claimed in claim 1, characterised by a content of particles smaller than 180 micrometres of at least 15 wt%.

3. A detergent composition as claimed in any preceding claim, characterised in that the foam control granule comprises from 5 to 20 wt% of a silicone foam control agent, from 20 to 95 wt% of starch, and optionally up to 75 wt% of a further carrier material.

4. A detergent composition as claimed in claim 3, characterised in that the further carrier material is an inorganic salt.

5. A detergent composition as claimed in claim 4,
characterised in that the further carrier material is sodium sulphate.

6. A detergent composition as claimed in any preceding claim, characterised in that the silicone foam control agent comprises a silicone oil and a hydrophobic silica.

7. A detergent composition as claimed in any preceding claim, characterised in that the silicone foam control agent comprises a silicone oil having a viscosity of from 3000 to 40 000 mPas.

8. A detergent composition as claimed in any preceding claim, characterised in that it contains from 0.5 to 5 wt% of the foam control granule.

9. A detergent composition as claimed in any preceding claim, characterised by a bulk density of at least 650 g/litre.

10. A detergent composition as claimed in any preceding claim, characterised in that an otherwise identical control powder minus the foam control granule gives a dispenser residue (as hereinbefore defined) of at least 20 wt%.

11. Use of a foam control granule comprising a silicone foam control agent on an absorbent carrier material comprising

a starch to improve the dispensing behaviour in a drum-type automatic washing machine of a particulate controlled foam detergent composition.

## Patentansprüche

1. Teilchenförmige, schaumgebremste Waschmittelzusammensetzung, enthaltend eine schaumbekämpfende Menge eines Schaumbekämpfungsgranulats, umfassend ein Silikon-Schaumbekämpfungsmittel auf einem absorbierenden Trägermaterial, dadurch gekennzeichnet, dass

   (a) die Zusammensetzung einen Anteil von Teilchen, kleiner als 180 Mikrometer von mindestens 10 Gewichtsprozent aufweist und dass
   (b) das absorbierende Trägermaterial des Antischaumgranulats eine Stärke umfasst.

2. Waschmittelzusammensetzung nach Anspruch 1, gekennzeichnet durch einen Anteil von Teilchen, kleiner als 180 Mikrometer, von mindestens 15 Gewichtsprozent.

3. Waschmittelzusammensetzung nach einem vorangehenden Anspruch, dadurch gekennzeichnet, dass das Schaumbekämpfungsgranulat 5 bis 20 Gewichtsprozent eines Silikon-Schaumbekämpfungsmittels, 20 bis 95 Gewichtsprozent Stärke und gegebenenfalls bis zu 75 Gewichtsprozent eines weiteren Trägermaterials umfasst.

4. Waschmittelzusammensetzung nach Anspruch 3, dadurch gekennzeichnet, dass das weitere Trägermaterial ein anorganisches Salz ist.

5. Waschmittelzusammensetzung nach Anspruch 4, dadurch gekennzeichnet, dass das weitere Trägermaterial Natriumsulfat ist.

6. Waschmittelzusammensetzung nach einem vorangehenden Anspruch, dadurch gekennzeichnet, dass das Silikon-Schaumbekämpfungsmittel ein Silikonöl und ein hydrophobes Siliziumdioxid umfasst.

7. Waschmittelzusammensetzung nach einem vorangehenden Anspruch, dadurch gekennzeichnet, dass das Silikon-Schaumbekämpfungsmittel ein Silikonöl mit einer Viskosität von 3000 bis 40 000 mPa.s umfasst.

8. Waschmittelzusammensetzung nach einem vorangehenden Anspruch, dadurch gekennzeichnet, dass sie 0,5 bis 5 Gewichtsprozent des Schaumbekämpfungsgranulats enthält.

9. Waschmittelzusammensetzung nach einem vorangehenden Anspruch, gekennzeichnet durch eine Schüttdichte von mindestens 650 g/Liter.

10. Waschmittelzusammensetzung nach einem vorangehenden Anspruch, dadurch gekennzeichnet, dass ein ansonsten identisches Bekämpfungspulver abzüglich des Schaumbekämpfungsgranulats einen Ausgaberückstand (wie vorstehend definiert) von mindestens 20 Gewichtsprozent ergibt.

11. Verwendung eines Schaumbekämpfungsgranulats, umfassend ein Silikon-Schaumbekämpfungsmittel auf einem absorbierenden Trägermaterial, umfassend eine Stärke, um das Ausgabeverhalten einer teilchenförmigen schaumgebremsten Waschmittelzusammensetzung in einer automatischen Waschmaschine vom Trommeltyp zu verbessern.

## Revendications

1. Composition détergente à mousse réglée particulaire contenant une quantité de réglage de la mousse d'un granule de réglage de la mousse comprenant un agent de réglage de la mousse à la silicone sur un véhicule absorbant, caractérisée en ce que :

   (a) la composition a une teneur en particules plus petite que 180 micromètres d'au moins 10% en poids et en ce que :

(b) le véhicule absorbant du granule antimoussant comprend un amidon.

**2.** Composition détergente selon la revendication 1, caractérisée par une teneur en particules plus petite que 180 micromètres d'au moins 15% en poids.

**3.** Composition détergente selon l'une quelconque des revendications précédentes, caractérisée en ce que le granule de réglage de la mousse comprend de 5 à 20% en poids d'un agent de réglage de la mousse à la silicone, de 20 à 95% en poids d'amidon et, facultativement, jusqu'à 75% en poids d'un véhicule supplémentaire.

**4.** Composition détergente selon la revendication 3, caractérisée en ce que le véhicule supplémentaire est un sel minéral.

**5.** Composition détergente selon la revendication 4, caractérisée en ce que le véhicule supplémentaire est le sulfate de sodium.

**6.** Composition détergente selon l'une quelconque des revendications précédentes, caractérisée en ce que l'agent de réglage de la mousse à la silicone comprend une huile de silicone et une silice hydrophobe.

**7.** Composition détergente selon l'une quelconque des revendications précédentes, caractérisée en ce que l'agent de réglage de la mousse à la silicone comprend une huile de silicone ayant une viscosité de 3000 à 40.000 mPas.

**8.** Composition détergente selon l'une quelconque des revendications précédentes, caractérisée en ce qu'elle contient de 0,5 à 5% en poids du granule de réglage de la mousse.

**9.** Composition détergente selon l'une quelconque des revendications précédentes, caractérisée par une densité apparente d'au moins 650 g/litre.

**10.** Composition détergente selon l'une quelconque des revendications précédentes, caractérisée en ce qu'une poudre témoin moins le granule de réglage de la mousse (poudre de base détergente) autrement identique donne un résidu de distributeur (comme défini ci-dessus) d'au moins 20% en poids.

**11.** Utilisation d'un granule de réglage de la mousse comprenant un agent de réglage de la mousse à la silicone sur un véhicule absorbant comprenant un amidon pour améliorer le comportement de distribution dans une machine à laver automatique du type à tambour d'une composition détergente à mousse réglée particulaire.

Fig.1.

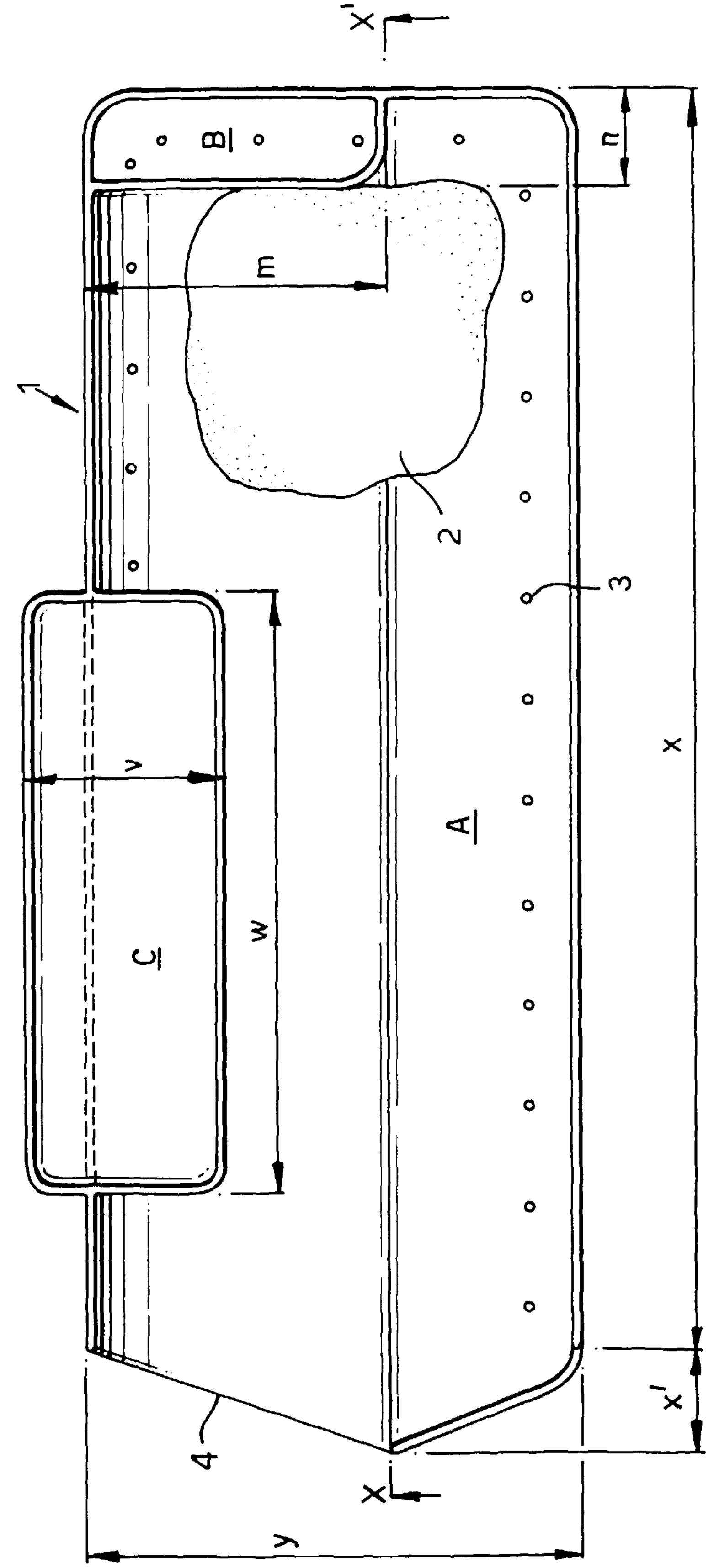

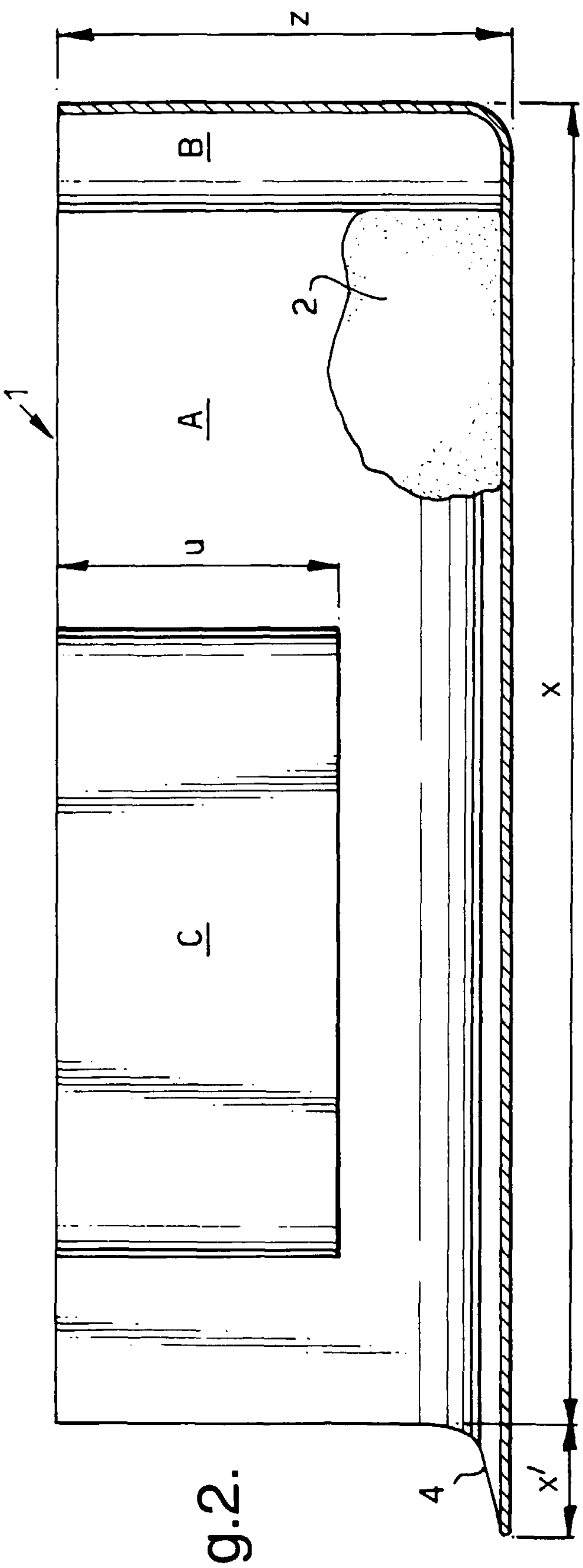


Fig.2.

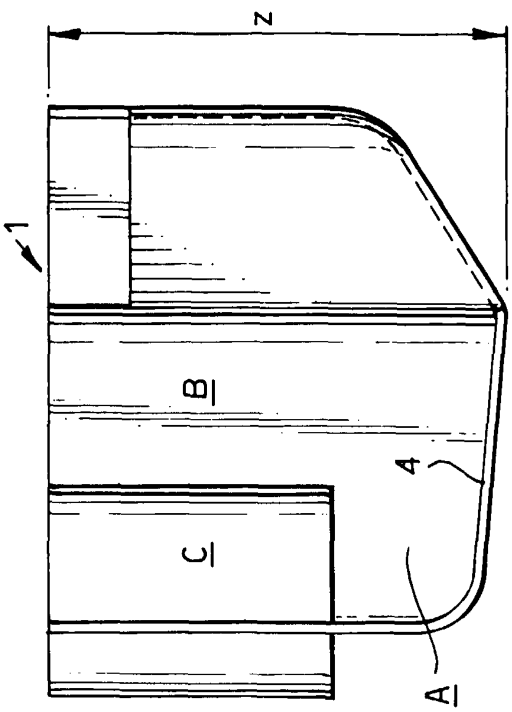


Fig.3.